# EUROPEAN PATENT APPLICATION

(11) **EP 1 790 864 A1**
(43) Date of publication of application: **30.05.2007**
(21) Application number: 05781969.0
(22) Date of filing: 09.09.2005
(51) Int. Cl.: F16C 3/02, B21H 5/00, B21K 1/10, F16D 1/06, F16D 3/20

(54) **HOLLOW POWER TRANSMISSION SHAFT**

(30) Priority: 16.09.2004 JP 2004270343
(71) Applicant: NTN CORPORATION, Osaka-shi, Osaka 550-0003 (JP)
(72) Inventor: SAKURAI, Katsuhiro, NTN CORPORATION, Iwata-shi, Shizuoka 438-0037 (JP); NAKAGAWA, Toru, NTN CORPORATION, Iwata-shi, Shizuoka 438-0037 (JP)
(74) Representative: Mischung, Ralf
(86) International application number: PCT/JP2005/016624
(87) International publication number: WO 2006/030709

(57) **Abstract**

Provided is a hollow power transmission shaft exhibiting an increased strength when a pipe used as a material thereof is machined to make the pipe unlikely to crack during processing. A pipe (P) made of steel is normalized to improve its machinability as a raw material and obtain uniform strength. This canmake the pipe unlikely to crack during splining and rolling.

## Description

### BACKGROUND OF THE INVENTION

### 1. Field of the Invention

The present invention relates to a hollow power transmission shaft coupled to a joint such as a constant velocity universal joint. The hollow power transmission shaft according to the present invention is applicable, for example, to a drive shaft or a propeller shaft which is a component of a power transmission system of an automobile.

### 2. Description of the Related Art

For example, in a power transmission system of an automobile, a power transmission shaft for transmitting power from a reduction gear (differential) to driving wheels is often referred to as a drive shaft. Especially in a drive shaft used for a front-engine front-drive vehicle, a large working angle and constancy of velocity are required in steering front wheels, and a function of absorbing axial displacement is required in relation to a suspension system. In many cases, therefore, there has been adopted a mechanism structured such that the drive shaft is coupled at one end thereof to a reduction gear side via a slidable constant velocity universal joint such as a double offset-type constant velocity universal joint or a tripod-type constant velocity universal joint, and at the other end thereof to a driving wheel side via a fixed constant velocity universal joint such as a Birfield-type constant velocity universal joint (which is also referred to as Rzeppa joint).

Conventionally, a solid shaft has been often used as the drive shaft as mentioned above. However, there has been a growing demand for adoption of a hollow shaft as the drive shaft with a view to saving a weight of the automobile, achieving functional improvements through an increase in rigidity of the drive shaft, enhancing tranquility within a cabin of the automobile through optimization of tuning of a flexural primary natural frequency, and so on.

In the hollow shaft of this type, a pipe is drawn through swaging to form a large-diameter portion along a central portion thereof and small-diameter portions at both ends thereof, and splines are formed through component rolling on outer peripheries of ends of the small-diameter portions respectively (JP 11-101259 A).

The pipe used as the material of the conventional hollow power transmission shaft is obtained by forming a pipe from steel, annealing the pipe by way of heat treatment for stress relief and softening, and then swaging and rolling the pipe.

However, the pipe annealed by way of heat treatment is relatively low in strength, so there is caused a problem in that the pipe lacks in strength when being swaged.

### SUMMARY OF THE INVENTION

It is therefore an object of the present invention to provide a hollow power transmission shaft exhibiting an increased strength when a pipe used as a material thereof is machined.

To achieve the above-mentioned object, a hollow power transmission shaft according to the present invention is characterized in that a pipe as a material thereof, which has not been subjected to deformation processing yet, is normalized by way of heat treatment. Thus, the pipe exhibits an increased strength due to natures of steel such as rigidness and viscosity. As a result, the pipe exhibits an enhanced strength when being subjected to deformation processing afterward.

According to the present invention, the pipe used as the material is normalized by way of heat treatment. Therefore, the pipe can be prevented from lacking in strength at the time of deformation processing or component rolling, and operations leading to a waste of the material can be eliminated. The pipe according to the present invention is increased in flat strength in comparison with the pipe annealed by way of heat treatment, and thus can be molded from steel containing a higher percentage of carbon. As a result, the strength of the shaft can be enhanced. Thus, the hollow power transmission shaft can be made lightweight and compact through a reduction in thickness or diameter, and at the same time, the costs for manufacturing the hollow power transmission shaft can be reduced.

### BRIEF DESCRIPTION OF THE DRAWINGS

In the accompanying drawings:
FIG. 1 is a view showing a power transmission mechanism of an automobile;
FIG. 2 is a partially sectional view showing a hollow power transmission shaft; and
FIG. 3 is a sectional view of a pipe.

### DETAILED DESCRIPTION OF THE PREFERRED EMBODIMENT

Embodiment of the present invention will be described with reference to the drawings.

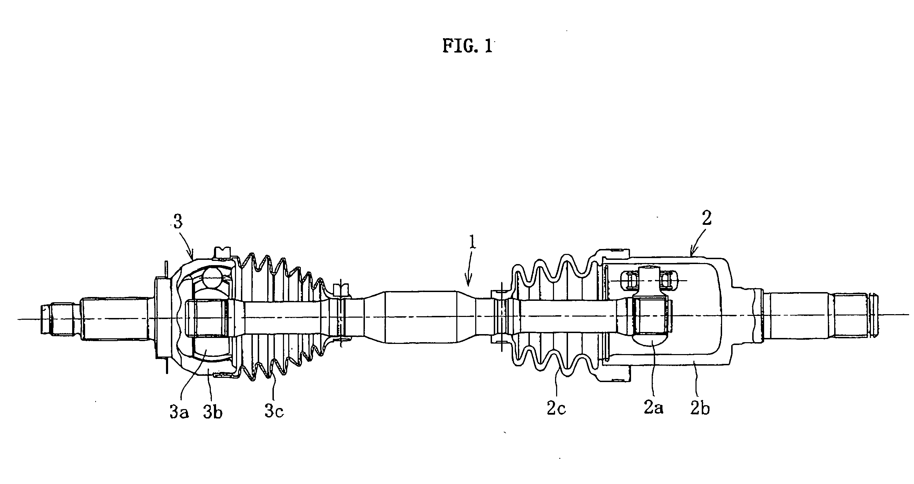

FIG. 1 shows a power transmission mechanism for an automobile which is equipped with a hollow power transmission shaft 1, a slidable constant velocity universal joint 2 coupled to one end of the power transmission shaft 1, and a fixed constant velocity universal joint 3 coupled to the other end of the power transmission shaft 1.

In the power transmission mechanism according to this embodiment, the slidable constant velocity universal joint 2 is coupled to a reducing gear (differential), and the fixed constant velocity universal joint 3 is coupled to a driving wheel side. The power transmission shaft 1 is spline-coupled at one end thereof to a tripod member 2a of the slidable constant velocity universal joint 2, and a boot 2c is fixed to each of an outer periphery of an end of an outer wheel 2b of the slidable constant velocity universal joint 2 and an outer periphery of the power transmission shaft 1.

The power transmission shaft 1 is spline-coupled at the other end thereof to an inner wheel 3a of the fixed constant velocity universal joint 3, and a boot 3c is fixed to each of an outer periphery of an end of an outer wheel 3b of the fixed constant velocity universal joint 3 and the outer periphery of the power transmission shaft 1.

In FIG. 1, a tripod-type constant velocity universal joint is illustrated as an example of the slidable constant velocity universal joint 2, and a Birfield-type constant velocity universal joint is illustrated as an example of the fixed constant velocity universal joint 3. However, other types of constant velocity universal joints may also be employed.

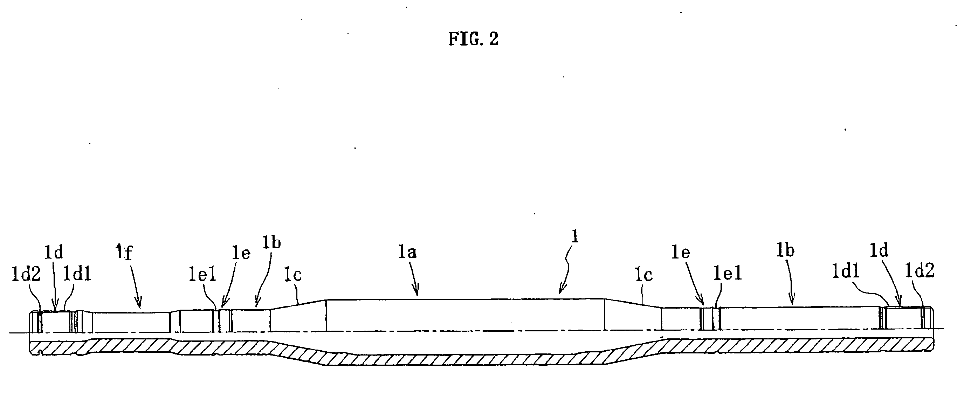

FIG. 2 shows the power transmission shaft (drive shaft) 1. The power transmission shaft 1 is hollow over an entire axial range thereof. The power transmission shaft 1 has a large-diameter portion 1a along an axially central portion thereof and small-diameter portions 1b along axially opposite lateral portion thereof respectively, which are located laterally with respect to the large-diameter portion 1a. The large-diameter portion 1a is continuous with the small-diameter portions 1b via tapered portions 1c respectively, which gradually decrease in diameter toward axial end sides of the power transmission shaft 1 respectively. The small-diameter portions 1b have coupling portions 1d (coupling components of the present invention) formed on outer peripheries of end sides, which serve to couple the power transmission shaft 1 to the constant velocity universal joints 2 and 3, and boot fixing portions 1e on the axially central portion side, to which the boots 2c and 3c are fixed respectively. The power transmission shaft 1 has a smallest-diameter portion If such that the fixed constant velocity universal joint 3 does not interfere with the power transmission shaft 1 when the fixed constant velocity universal joint 3 forms a large working angle.

Splines 1d1, which are spline-coupled to the constant velocity universal joints 2 and 3 respectively, are formed on the coupling portions 1d respectively. Retaining ring grooves 1d2, in which retaining rings for preventing the power transmission shaft 1 from falling off in the axial direction from the constant velocity universal joints 2 and 3 are to be mounted respectively, are formed in the coupling portions 1d respectively. Fitting grooves 1e1, in which inner peripheries of small-diameter ends of the boots 2c and 3c are to be fitted respectively, are formed in the boot fixing portions le respectively.

The power transmission shaft 1 has a hardened layer formed by a hardening treatment substantially over the entire axial range thereof, except regions extending from the vicinities of the retaining ring grooves 1d2 to the axial ends respectively. The hardened layer is formed over a region extending from the outer peripheral surface of the power transmission shaft 1 to a predetermined depth or a full depth.

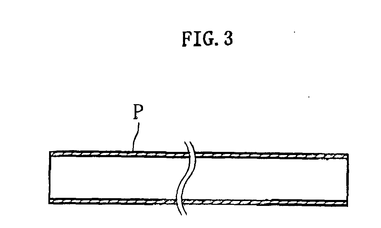

The power transmission shaft 1 is obtained by normalizing a hollow pipe P (straight pipe in FIG. 3), which is made of steel, by way of heat treatment so that the pipe P assumes the natures of steel such as rigidness and viscosity.

A carbon steel pipe for structural purposes (STKM) or the like is mainly used as the steel forming the pipe P. A material containing 0.30 to 0.45 wt% of C, 0.05 to 0.35 wt% of Si, 1.0 to 2.0 wt% of Mn, 0.05 or less wt% of Al, 0.01 or less wt% of S, and the balance composed of Fe and inevitable impurities can be used as the steel.

It is generally known that hardness constitutes a major factor for the torsional fatigue strength of the hollow power transmission shaft 1. Thehardness greatly depends on the components of the steel as well. That is, although C is an element determining the hardness after hardening, other elements (e.g., Si and Mn) effectively act in determining the hardness after hardening in a depth direction. Therefore, those components need to be adjusted.

C is an element necessary to ensure the torsional fatigue strength of the hollowpower transmission shaft 1. In order to obtain a predetermined hardness after heat treatment, 0.30 or more wt% of C is required. When the content of C exceeds 0.45 wt%, the hardness of the steel excessively increases and has an adverse effect on machinability. Therefore, the upper limit of the content of C is set to 0.45 wt%.

Only a small amount of Si is required as an agent for deoxidizing the steel. Si is also an element necessary to ensure the induction hardening properties of the steel. When the content of Si is lower than 0.05 wt%, the effect of ensuring the induction hardening properties of the steel is weak. When the content of the Si to be added is higher than 0.35 wt%, a substantial deterioration in machinability is observed. Therefore, the upper limit of the content of Si is set to 0.35 wt%.

The addition of 1.0 or more wt% of Mn is necessary to ensure high induction hardening properties of the steel. However, when 2.0 or more wt% of Mn is added, a substantial deterioration in machinability is observed. Therefore, the upper limit of the content of Mn is set to 2.0 wt%.

Al is added as an agent for deoxidizing the steel. To prevent the cleanliness factor of the steel from lowering, it is desirable to reduce the amount of the Al to be added. Therefore, the upper limit of the content of Al is set to 0.05 wt%.

S serves to lower the deformability during cold machining. When the content of S exceeds 0.01 wt%, a substantial decrease in deformability is observed. Therefore, the upper limit of the content of S is set to 0.01 wt%.

To supplement the induction hardening properties of the steel, the steel may contain 0.1 to 0.35 wt% of Cr and 0.0005 to 0.005 wt% of B. The steel may contain at least one of Cr and B. When the content of Cr is lower than 0.1 wt%, the effect of supplementing the induction hardening properties of the steel is weak. When more than 0. 35 wt% of Cr is added, the cost of the steel is increased. When the content of B is lower than 0.0005 wt%, the effect of supplementing the induction hardening properties of the steel is weak. Even when more than 0.005 wt% of B is added, the effect resulting from the induction hardening properties of the steel remains unchanged.

After the hollow power transmission shaft 1 has been subjected to induction hardening and tempering, an entire periphery thereof may be subjected to a shot peening treatment. By increasing a residual compressive stress applied to a surface portion of the power transmission shaft 1, the torsional fatigue strength thereof can further be enhanced. The above-mentioned shot peening treatment generally refers to a process of pelting a metal surface with minute steel particles through the use of compressed air or a centrifugal force to homogenize the stress applied to the surface.

The pipe P normalized as described above is then swaged by way of deformation processing, so the large-diameter portion 1a is molded along the axially central portion thereof and the small-diameter portions 1b are molded along the axially opposite lateral portions thereof respectively. The outer peripheries of both the ends of the small-diameter portions 1b are rolled to mold the splines 1d1. The normalized pipe P assumes the natures of steel such as rigidness and viscosity. Therefore, the pipe P is unlikely to lack in strength when being swaged, rolled, or rolled after having been swaged.

The presence/absence of cracks during swaging and the flat strength during component rolling are illustrated as follows.

1) Presence/absence of cracks when swaging is performed with reduction of area of 40%

**[Table 1]**

| | Presence/absence of cracks |
|---|---|
| Annealed article | Present |
| Normalized article | Absent |

2) Torque at which initial fissure is developed when article with outer diameter of 25 mm, inner diameter of 8.6 mm, and length of 20 mm is deformed

**[Table 2]**

| | Load at which fissure is developed |
|---|---|
| Annealed article | 100 |
| Normalized article | 210 |

| | |
|---|---|
| * The load at which a fissure is developed in an annealed article is assumed to be 100. | |

As shown in Table 1 and Table 2, the normalized pipe P is more rigid and more viscous than the annealed pipe. Therefore, the pipe P exhibits a uniform machining strength when being machined. Thus, the pipe P is unlikely to lack in strength. Accordingly, the material is prevented frombeing wasted, so the effective utilization of resources is realized.

The normalized pipe P is increased in flat strength due to the natures such as rigidness and viscosity. Therefore, the pipe P can be molded using steel containing a higher percentage of carbon, so the strength of the shaft can be enhanced. This enhancement of the strength leads to a reduction in thickness or diameter and thus to a reduction in weight and cost.

## Claims

1. A hollow power transmission shaft, which is obtained by subjecting a pipe made of steel to deformation processing into a desired shape,
wherein the pipe is normalized by way of heat treatment before being subjected to the deformation processing.

2. A hollow power transmission shaft according to claim 1,
wherein the pipe is swaged by way of the deformation processing.

3. A hollow power transmission shaft according to claim 1,
wherein the pipe is rolled by way of the deformation processing.

4. A hollow power transmission shaft according to claim 1,
wherein the pipe is swaged and then rolled by way of the deformation processing.

5. A hollow power transmission shaft, which is obtained by swaging a pipe made of steel into a desired shape, and rolling the pipe to form splines at both ends thereof respectively,
wherein the pipe is normalized by way of heat treatment before being swaged and rolled.
